# EUROPÄISCHE PATENTSCHRIFT

(11) **EP 1 127 930 B1**
(45) Veröffentlichungstag und Bekanntmachung des Hinweises auf die Patenterteilung: **29.10.2003**
(21) Anmeldenummer: 00103865.2
(22) Anmeldetag: 24.02.2000
(51) Int. Cl.: C09D 183/08

(54) **Verfahren zur Herstellung einer schmutzabweisenden Beschichtung und Beschichtungslösung zur Durchführung des Verfahrens**
Method and coating solution for preparing a dirt repellent coating
Méthode et solution de revêtement pour la préparation d'un revêtement anti-salissure

(43) Veröffentlichungstag der Anmeldung: 29.08.2001
(73) Patentinhaber: Franz Kaldewei GmbH & Co.KG, 59229 Ahlen (DE)
(72) Erfinder: Gerhard, Volker Dr., 59077 Hamm (DE)
(74) Vertreter: Albrecht, Rainer Harald, Dr.-Ing.

(56) Entgegenhaltungen:
- EP-A- 0 776 925
- DE-A- 19 535 729
- DE-A- 19 730 245

## Beschreibung

Die Erfindung betrifft ein Verfahren zur Herstellung einer schmutzabweisenden Beschichtung, von Email-, Keramik-, Glas- oder Metalloberflächen oder Kunststoffen, die mit anorganischen/organischen Kompositmaterialien beschichtet sind. Gegenstand der Erfindung ist auch eine Beschichtungslösung für die Durchführung des Verfahrens.

Bei dem bekannten Verfahren der eingangs genannten Art, von dem die Erfindung ausgeht (EP 0 587 667 B1), werden durch Hydrolyse Polykondensate aus einer oder mehreren hydrolysierbaren Siliciumverbindungen gebildet, wobei zumindest ein Teil dieser Siliciumverbindungen neben hydrolysierbaren Gruppen auch nicht-hydrolysierbare kohlenstoffhaltige Gruppen aufweist. Das Gesamtmolverhältnis der hydrolysierbaren Gruppen zu den nicht-hydrolysierbaren kohlenstoffhaltigen Gruppen in den zugrundeliegenden monomeren Ausgangsverbindungen beträgt bei dem bekannten Verfahren 10 : 1 bis 1 : 2. Bei 0,1 bis 100 mol-% der nicht-hydrolysierbaren kohlenstoffhaltigen Gruppen handelt es sich um Gruppen, die durchschnittlich 5 bis 30 Fluoratome aufweisen, die an ein oder mehrere aliphatische Kohlenstoffatome gebunden sind. Bei diesem bekannten Verfahren werden zunächst die Ausgangsverbindungen, die keine der genannten fluorhaltigen Gruppen aufweisen, durch Zugabe von Wasser hydrolysiert und vorkondensiert. Erst danach werden die Verbindungen mit den fluorhaltigen Gruppen zugegeben. Die Zugabe dieser Verbindungen erfolgt erst, wenn der Wassergehalt des Systems nicht mehr als 5 Gew.-% beträgt und nicht mehr als 50 % der theoretisch möglichen Hydroxylgruppen im System vorliegen.

Die mit dem bekannten Verfahren auf Substraten erzeugbaren Beschichtungen weisen eine Schichtdicke von vorzugsweise 1 bis 100 µm auf. Die vorstehend beschriebene Verfahrensführung ist verhältnismäßig aufwendig. Aufgrund der großen Schichtdicken sind ferner aufwendige Maßnahmen zur Applikation und Härtung optisch einwandfreier Schichten notwendig. Es besteht die Gefahr von Unregelmäßigkeiten, z. B. durch Staubeinschlüsse, die sich auch auf die mechanischen Eigenschaften der Beschichtungen nachteilhaft auswirken können.

Demgegenüber liegt der Erfindung das technische Problem zugrunde, ein Verfahren der eingangs genannten Art anzugeben, mit dem auf einfache und wenig aufwendige Weise Beschichtungen herstellbar sind, die allen Anforderungen, insbesondere im Hinblick auf das äußere Erscheinungsbild, genügen. Der Erfindung liegt fernerhin das technische Problem zugrunde, eine Beschichtungslösung zur Durchführung des Verfahrens anzugeben.

Zur Lösung dieses technischen Problems lehrt die Erfindung ein Verfahren zur Herstellung einer schmutzabweisenden Beschichtung, von Email-, Keramik-, Glas- oder Metalloberflächen oder Kunststoffen, die mit anorganischen/organischen Kompositmaterialien beschichtet sind, wobei

ein Gemisch aus zumindest einer ersten Siliciumverbindung mit hydrolysierbaren Gruppen und zumindest einer zweiten Siliciumverbindung, die neben hydrolysierbaren auch nicht-hydrolysierbare organische Gruppen mit fluorierten aliphatischen und/oder aromatischen Kohlenstoffen enthält, mit der Maßgabe hergestellt wird, daß das Mol-Verhältnis von hydrolysierbaren zu nicht-hydrolysierbaren Gruppen z : 1, mit z > 10, beträgt,
das Gemisch einer Hydrolyse unterworfen wird und
das Reaktionsgemisch mit zumindest einem organischen Lösungsmittel und/oder mit Wasser verdünnt wird und in verdünntem Zustand so auf das Substrat aufgebracht wird, dass nach Aushärtung eine Schicht mit einer Schichtdicke von weniger als 10 nm erzeugt wird.

Erfindungsgemäß wird eine flächige Beschichtung von Oberflächen erreicht, die sich durch optimale physikalische Eigenschaften, wie beispielsweise gute Schutzabweisung, Abriebfestigkeit der Oberfläche, hohe Temperaturbeständigkeit, auszeichnet. Die Oberfläche besitzt eine niedrige Oberflächenenergie. Die erfindungsgemäß aufgebrachten Beschichtungen weisen auch eine ausgezeichnete Transparenz und Farbneutralität auf. Besondere Bedeutung kommt hierbei der erfindungsgemäßen Verfahrensweise zu, wonach eine Beschichtung mit einer Schichtdicke von weniger als 10 nm erzeugt wird. Diese dünnen Beschichtungen zeichnen sich durch besondere Vorteile aus. Neben der hervorragenden Transparenz zeigen die Beschichtungen ein einwandfreies äußeres Erscheinungsbild. Staubeinschlüsse oder Lufteinschlüsse sind ausgeschlossen. Verschleißspuren sind auch nach längerer Zeit an der Oberfläche der Beschichtung nicht erkennbar. Selbst eine vollständige Entfernung der Beschichtung in Teilbereichen der Oberfläche ist bei den geringen Schichtdicken nicht wahrnehmbar. Dies ist insbesondere für Oberflächen im Sanitär- und Badbereich, wie beispielsweise Bade- oder Duschwannen, Fliesen, Duschabtrennungen, Armaturen und dergleichen, vorteilhaft. Von besonderer Bedeutung ist fernerhin, dass das erfindungsgemäße Verfahren auf sehr einfache und wenig aufwendige Weise durchführbar ist. Im Gegensatz zu dem eingangs erläuterten bekannten Verfahren wird die fluorierte Siliciumverbindung von Anfang an dem Ausgangsgemisch zugegeben und mit den übrigen Ausgangsverbindungen unmittelbar hydrolysiert.

Die erste Siliciumverbindung weist hydrolysierbare Gruppen auf und ist demnach in der Lage, durch Hydrolyse- und Kondensationsreaktionen ein Siliciumdioxid-Gerüst (SiO₂-Gerüst) zu bilden. Nach sehr bevorzugter Ausführungsform der Erfindung ist die erste Siliciumverbindung ein Alkoxysilan und/oder ein Halogensilan. Vorzugsweise wird als erste Siliciumverbindung ein Tetraalkoxysilan Si(OR)₄ verwendet (R: Alkylrest). Zweckmäßigerweise wird als erste Siliciumverbindung ein Silan mit vier identischen hydrolysierbaren Gruppen, bevorzugt vier identischen Alkoxygruppen, beispielsweise Ethoxygruppen, eingesetzt. Eine geeignete erste Siliciumverbindung ist zum Beispiel Tetraethoxysilan Si(OC₂H₅)₄. Nach einer weiteren Ausführungsform der Erfindung wird als erste Siliciumverbindung ein Tetrahalogensilan SiX₄ eingesetzt, wobei X vorzugsweise Chlor oder Brom ist. Zweckmäßigerweise wird ein Tetrahalogensilan mit vier identischen Halogengruppen verwendet.

Erfindungsgemäß wird für die zweite Siliciumverbindung zumindest teilweise ein Silan eingesetzt, das fluorierte aliphatische und/oder aromatische Kohlenstoffatome in der nicht-hydrolysierbaren Gruppe enthält. Zweckmäßigerweise wird dabei z. B. ein partiell fluoriertes Alkyl-Alkoxysilan R^{f}ₓR'_{y}Si(OR)_{4-x-y} (R, R': Alkylrest; R^{f} : partiell fluorierter Alkylrest) verwendet. Als partiell fluoriertes Alkyl-Alkoxysilan hat sich im Rahmen der Erfindung insbesondere Tridekafluoro-1,1,2,2-tetrahydrooctyltriethoxysilan (CAS [51851-37-7]) bewährt. Zweckmäßigerweise werden als zweite Siliciumverbindung fluorierte Silane eingesetzt, bei denen Fluoratome an ein oder mehrere aliphatische und/oder aromatische Kohlenstoffatome gebunden sind, welche durch zumindest zwei C-Atome vom Siliciumatom getrennt sind. Nach sehr bevorzugter Ausführungsform ist im Rahmen des erfindungsgemäßen Verfahrens ein Silan mit fluorierten aliphatischen und/oder aromatischen C-Atomen in dem zu hydrolysierenden Gemisch aus den Siliciumverbindungen von vornherein enthalten. Vorzugsweise wird also gleichsam ein Eintopf-Verfahren durchgeführt, während bei dem bekannten Verfahren nach EP 0 587 667 B1 zunächst die übrigen Ausgangsverbindungen hydrolysiert und kondensiert werden, bevor das Silan mit den fluorierten aliphatischen C-Atomen zugegeben wird.

Nach sehr bevorzugter Ausführungsform der Erfindung ist ein Teil der zweiten Siliciumverbindung ein Silan mit zumindest einem Alkylsubstituenten als nicht-hydrolysierbare Gruppe. Nach einer Ausführungsform wird ein alkylsubstituiertes Alkoxysilan R'ₓSi(OR)₄₋ₓ, vorzugsweise ein Alkyltrialkoxysilan R'Si(OR)₃ , verwendet (R, R' : Alkylrest). Zweckmäßigerweise wird ein Alkyltriethoxysilan, bevorzugt Methyltriethoxysilan (MTEOS) oder Propyltriethoxysilan (PTEOS) als zweite Siliciumverbindung eingesetzt. Nach einer weiteren bevorzugten Ausführungsform der Erfindung ist die zweite Siliciumverbindung ein alkylsubstituiertes Halogensilan R'ₓSiX₄₋ₓ (R': Alkylrest).

Erfindungsgemäß beträgt das Mol-Verhältnis der hydrolysierbaren zu den nicht-hydrolysierbaren Guppen in den Siliciumverbindungen z : 1 mit z > 10. Vorzugsweise ist z < 30. Das Mol-Verhältnis von hydrolysierbaren zu nicht-hydrolysierbaren Gruppen beträgt bevorzugt 11 : 1 bis 25 : 1. Das Mol-Verhältnis bezieht sich im übrigen auf die im Gemisch der monomeren Siliciumausgangsverbindungen vorliegenden hydrolysierbaren bzw. nicht-hydrolysierbaren Gruppen, d. h. auf die vor Durchführung der Hydrolyse vorliegenden Gruppen.

Die erfindungsgemäßen Hydrolyse- und Kondensationsreaktionen können entweder sauer oder basisch katalysiert werden. Nach einer bevorzugten Ausführungsform der Erfindung wird die Hydrolyse sauer katalysiert. Die saure Katalyse findet dabei zweckmäßigerweise mit Hilfe von organischen Säuren, beispielsweise Essigsäure, Propionsäure und dergleichen statt. Die saure Katalyse kann auch mit Hilfe von anorganischen Säuren, wie Salzsäure, Schwefelsäure oder Phosphorsäure durchgeführt werden.

Nach bevorzugter Ausführungsform der Erfindung beträgt das Mol-Verhältnis der eingesetzten Wassermenge zu den hydrolysierbaren Gruppen 0,2 : 1 bis 2 : 1. Bei der genannten Wassermenge handelt es sich um das für die Hydrolyse insgesamt zugegebene Wasser. Sehr bevorzugt beträgt das Mol-Verhältnis der eingesetzten Wassermenge zu den hydrolysierbaren Gruppen 0,5 : 1 bis 1 : 1. Um die Hydrolysereaktion insbesondere in der Anfangsphase zu beschleunigen kann ein Lösungsmittel eingesetzt werden, in dem sich zumindest zum Teil sowohl die Siliciumverbindungen als auch das für die Hydrolyse beigegebene Wasser lösen. Bei dem genannten Lösungsmittel handelt es sich beispielsweise um den Alkohol, der bei der Hydrolyse und Kondensation der vorzugsweise eingesetzten Alkoxysilane ohnehin freigesetzt wird.

Nach bevorzugter Ausführungsform wird mit der Maßgabe gearbeitet, daß eine zunächst zweiphasige Mischung aus den Siliciumverbindungen und Wasser mit Fortschritt der Hydrolyse einphasig wird. Es liegt im Rahmen der Erfindung, daß das zunächst zweiphasige Gemisch nach einer Reaktionszeit von 10 Min. bis 90 Min., vorzugsweise von 40 bis 50 Min., beispielsweise 45 Min., aufgrund der fortschreitenden Reaktion und der dabei gebildeten Lösungsmittel einphasig wird. Bei Einsatz geeigneter Lösungsmittelmengen lässt sich die Reaktion auch von Beginn an einphasig durchführen.

Das hydrolysierte und kondensierte Produkt wird mit zumindest einem organischen Lösungsmittel und/oder mit Wasser verdünnt und im verdünnten Zustand auf das Substrat aufgebracht. Dabei kann die Verdünnung auch mit einem Lösungsmittel/Wasser-Gemisch verwirklicht werden. Zur Verlängerung der Topfzeiten können mit Säuren versetzte Lösungsmittelgemische für die Verdünnung eingesetzt werden. Als organische Lösungsmittel für die Verdünnung des Produktes eignen sich vor allem Alkohole, Ether, Etheralkohole, Ester oder aromatische Kohlenwasserstoffe. Es liegt im Rahmen der Erfindung, dass die verdünnte Lösung maximal 25 Gew.-%, vorzugsweise weniger als 5 Gew.-% des hydrolysierten und kondensierten Produktes enthält. Die Verdünnung der Lösung wird zweckmäßigerweise in Abhängigkeit von dem Verfahren zur Auftragung der Lösung auf das Substrat gewählt.

Das Aufbringen des Produktes bzw. der Lösung des Produktes als Beschichtung auf ein Substrat bzw. auf die Oberfläche eines Substrates kann grundsätzlich mit Hilfe aller üblichen Beschichtungsverfahren erfolgen. Zweckmäßigerweise wird mit einer Tauchbeschichtung, Flutbeschichtung, Sprühbeschichtung, Walzenbeschichtung oder Schleuderbeschichtung gearbeitet. Das Aufbringen der Beschichtung kann auch durch Streichen oder ein Auftragen mit Tüchern erfolgen.

Gegebenenfalls wird der Lösung des hydrolysierten und kondensierten Produktes zumindest ein Tensid zugesetzt, wobei es sich um ein ionisches oder nichtionisches Tensid handeln kann. Hierdurch können die Verlaufseigenschaften des Produktes sowie die Benetzung der zu beschichtenden Oberfläche verbessert werden. Als Tenside können beispielsweise Natriumlaurylsulfat oder Fluortenside verwendet werden. Vorzugsweise beträgt die Konzentration der Tenside in der anwendungsfertigen Lösung des Produktes 0,01 bis 0,1 Gew.-%.

Die als Beschichtung aufgebrachte Lösung des hydrolysierten und kondensierten Produktes wird nach dem Aufbringen, vorzugsweise bei erhöhter Temperatur ausgehärtet. Die Aushärtung kann bei Temperaturen zwischen 20 und 350° C zweckmäßigerweise innerhalb eines Zeitraumes von 2 Min. bis 24 Std. erfolgen. Bevorzugt wird die Aushärtung bei Temperaturen zwischen 150 und 280° C und zwar zweckmäßigerweise über einen Zeitraum von 5 bis 30 Min durchgeführt.

Erfindungsgemäß wird die Beschichtung mit der Maßgabe aufgebracht, dass die resultierende Schichtdicke geringer als 10 nm ist. Die vorgenannte Schichtdicken bezieht sich dabei auf die bereits ausgehärtete Beschichtung. Die erfindungsgemäße Schichtdicken hat sich besonders bewährt. Wenn aufgrund des gewählten Auftragsverfahrens, beispielsweise bei einer Sprühbeschichtung, zu viel Material auf die zu beschichtende Oberfläche aufgebracht wird, läßt sich das überschüssige Material nach erfolgter Aushärtung als feines Pulver beispielsweise mit einem trockenen Tuch abreiben oder aber mit einer geeigneten Flüssigkeit, beispielsweise mit Seifenlösung oder mit organischen Lösemitteln, abwaschen.

Die Beschichtung kann auf Emailoberflächen, Keramikoberflächen, Glasoberflächen, Metalloberflächen aufgebracht werden. Zweckmäßigerweise werden Oberflächen beschichtet, die über Sauerstoffbrücken Bindungen zu den Siliciumatomen der Beschichtung aufbauen können. Auch mit anorganisch/organischen Kompositmaterialien beschichtete Kunststoffoberflächen eignen sich für die erfindungsgemäße Beschichtung. Hier kann eine chemische Anbindung über die anorganischen Anteile der Kompositschichten erfolgen.

Nachfolgend wird die Erfindung anhand von Ausführungsbeispielen näher erläutert:

### Ausführungsbeispiel 1:

37,4 g Tetraethoxysilan und 3,6 g Methyltriethoxysilan sowie 25,5 g Tridekafluoro-1,1,2,2-tetrahydrooctyltriethoxysilan werden zur Hydrolyse und Kondensation mit einer Lösung von 8,4 g 0,01n Salzsäure in 12 g Ethanol versetzt und 45 Min. gerührt. In den monomeren Ausgangsverbindungen beträgt das Mol-Verhältnis von hydrolysierbaren Gruppen zu nicht hydrolysierbaren Gruppen ca. 13,3 : 1. Während der Reaktion wird das zunächst zweiphasige Gemisch einphasig und es tritt eine leichte Erwärmung auf. Anschließend wird die Reaktionsmischung mit einem Gemisch aus 74 g Ethanol und 86 g 0,05n Salzsäure verdünnt (Stammlösung). Je nach der gewünschten Anwendung kann diese Lösung weiter verdünnt werden, beispielsweise mit einem Gemisch aus 50 Gew.-% Ethanol und 50 Gew.-% Wasser. Wenn ein Aufbringen der Stammlösung durch Auftragen mit Tüchern erfolgen soll, wird die Stammlösung zweckmäßigerweise mit dem genannten Ethanol-Wasser-Gemisch so weit verdünnt, bis eine 5 bis 10 Gew.-%ige Lösung erhalten wird.

### Ausführungsbeispiel 2:

41,6 g Tetraethoxysilan und 30,6 g Tridekafluoro-1,1,2,2-tetrahydrooctyltriethoxysilan werden zur Hydrolyse und Kondensation mit einer Lösung von 8,8 g 0,01n Salzsäure in 10 g Ethanol versetzt und 45 Min. lang gerührt. In den monomeren Ausgangsverbindungen beträgt das Mol-Verhältnis der hydrolysierbaren Gruppen zu den nicht-hydrolysierbaren Gruppen ca. 16,3 : 1. Das zunächst zweiphasige Gemisch wird im Verlaufe der Reaktion einphasig und es tritt eine leichte Erwärmung auf. Anschließend wird die Reaktionsmischung mit einem Gemisch aus 60 g Ethanol und 100 g 0,05n Salzsäure verdünnt (Stammlösung). In Abhängigkeit von der gewählten Anwendungsart kann diese Lösung weiter verdünnt werden, beispielsweise mit einem Alkohol oder mit Wasser oder mit einem Alkohol/Wasser-Gemisch. Beim Aufbringen der Beschichtung durch Auftragen mit Tüchern wird die Stammlösung beispielsweise mit einem 2:1-Gemisch aus Ethanol und Wasser so weit verdünnt, bis eine 5 bis 10 Gew.-%ige Lösung erhalten wird.

### Ausführungsbeispiel 3:

41,6 g Tetraethoxysilan und 4,1 g Propyltriethoxysilan sowie 10,2 g Tridekafluoro-1,1,2,2-tetrahydrooctyltriethoxysilan werden zur Hydrolyse und Kondensation mit einer Lösung von 16,6 g 0,5n Essigsäure in 20 g Ethanol versetzt und 45 Min. lang gerührt. In den monomeren Ausgangsverbindungen beträgt das Molverhältnis der hydrolysierbaren Gruppen zu den nicht-hydrolysierbaren Gruppen ca. 23 : 1. Das zunächst zweiphasige Gemisch wird im Verlaufe der Reaktion einphasig. Anschließend wird die Reaktionsmischung beispielsweise mit einem Gemisch aus 50 g Ethanol und 50 g Wasser verdünnt. In Abhängigkeit von der gewählten Auftragungsmethode kann diese Lösung weiter verdünnt werden, beispielsweise mit einem Alkohol oder einem Gemisch aus einem Alkohol und Wasser.

## Patentansprüche

1. Verfahren zur Herstellung einer schmutzabweisenden Beschichtung, von Email-, Keramik-, Glas- oder Metalloberflächen, oder Kunststoffen, die mit anorganischen/ organischen Kompositmaterialien beschichtet sind, wobei
ein Gemisch aus zumindest einer ersten Siliciumverbindung mit hydrolysierbaren Gruppen und zumindest einer zweiten Siliciumverbindung, die neben hydrolysierbaren Gruppen auch nicht-hydrolysierbare organische Gruppen mit fluorierten aliphatischen und/oder aromatischen Kohlenstoffen enthält, mit der Maßgabe hergestellt wird, daß das Mol-Verhältnis von hydrolysierbaren zu nicht-hydrolysierbaren Gruppen z : 1, mit z > 10, beträgt,
das Gemisch einer Hydrolyse unterworfen wird und
das Reaktionsgemisch mit zumindest einem organischen Lösungsmittel und/oder mit Wasser verdünnt wird und in verdünntem Zustand so auf das Substrat aufgebracht wird, dass nach Aushärtung eine Schicht mit einer Schichtdicke von weniger als 10 nm erzeugt wird.

2. Verfahren nach Anspruch 1, wobei als erste Siliciumverbindung ein Alkoxysilan und/oder ein Halogensilan eingesetzt wird.

3. Verfahren nach einem der Ansprüche 1 oder 2, wobei ein Teil der zweiten Siliciumverbindung ein Silan mit zumindest einem Alkylsubstituenten als nicht-hydrolysierbare Gruppe ist.

4. Verfahren nach einem der Ansprüche 1 bis 3, wobei die Hydrolyse sauer katalysiert wird.

5. Verfahren nach einem der Ansprüche 1 bis 4, wobei das Mol-Verhältnis der eingesetzten Wassermenge zu den hydrolysierbaren Gruppen 0,2 : 1 bis 2 : 1 beträgt.

6. Verfahren nach einem der Ansprüche 1 bis 5, wobei die Härtung bei erhöhter Temperatur durchgeführt wird.

## Claims

1. A method of producing an anti-soiling coating on enamel, ceramic, glass or metal surfaces, or on plastics which are coated with inorganic/organic composite materials, wherein
a mixture is prepared of at least one first silicon compound comprising hydrolysable groups and at least one second silicon compound which in addition to hydrolysable groups also contains non-hydrolysable organic groups comprising fluorinated aliphatic and/or aromatic carbons, with the proviso that the molar ratio of hydrolysable to non-hydrolysable groups is given by z : 1, where z > 10,
the mixture is subjected to hydrolysis, and
the reaction mixture is diluted with at least one organic solvent and/or with water and is applied in its diluted state to the substrate so that a layer with a layer thickness of less than 10 nm is produced after curing.

2. A method according to claim 1, wherein an alkoxysilane and/or a halogenosilane is used as the first silicon compound.

3. A method according to either one of claims 1 or 2, wherein part of the second silicon compound is a silane comprising at least one alkyl substituent as a non-hydrolysable group.

4. A method according to any one of claims 1 to 3, wherein the hydrolysis is acid-catalysed.

5. A method according to any one of claims 1 to 4, wherein the molar ratio of the amount of water used to the hydrolysable groups ranges from 0.2 : 1 to 2 : 1.

6. A method according to any one of claims 1 to 5, wherein curing is effected at an elevated temperature.

## Revendications

1. Procédé pour la préparation d'un revêtement anti-salissure, de surfaces d'émail, de céramique, de verre ou de métal, ou de matières plastiques, qui sont revêtues avec des matériaux composites inorganiques/organiques, **caractérisé en ce qu'**on
prépare un mélange d'au moins un premier composé de silicium avec des groupes hydrolysables et d'au moins un deuxième composé de silicium, qui contient en plus de groupes hydrolysables également des groupes organiques non hydrolysables avec des hydrocarbures aliphatiques et/ou aromatiques fluorés, sous réserve que le rapport molaire des groupes hydrolysables par rapport aux groupes non hydrolysables s'élève à z : 1, avec z > 10,
on hydrolyse le mélange et
on dilue le mélange réactionnel avec au moins un solvant organique et/ou avec de l'eau et on le dépose à l'état dilué sur le substrat de manière à produire après durcissement une couche avec une épaisseur de moins de 10 nm.

2. Procédé selon la revendication 1, **caractérisé en ce qu'**on utilise comme premier composé de silicium un alcoxysilane et/ou un halogénosilane.

3. Procédé selon une des revendications 1 ou 2, **caractérisé en ce qu'**une partie du deuxième composé de silicium est un silane avec au moins un substituant alkyle comme groupe non hydrolysable.

4. Procédé selon une des revendications 1 à 3, **caractérisé en ce que** l'hydrolyse est catalysée en milieu acide.

5. Procédé selon une des revendications 1 à 4, **caractérisé en ce que** le rapport molaire de la quantité d'eau mise en oeuvre par rapport aux groupes hydrolysables varie entre 0,2 : 1 et 2 : 1.

6. Procédé selon une des revendications 1 à 5, **caractérisé en ce qu'**on effectue le durcissement à température élevée.
